# EUROPÄISCHE PATENTSCHRIFT

(11) **EP 1 095 470 B1**
(45) Veröffentlichungstag und Bekanntmachung des Hinweises auf die Patenterteilung: **20.11.2002**
(21) Anmeldenummer: 99939937.1
(22) Anmeldetag: 23.06.1999
(51) Int. Cl.: H04B 7/005

(54) **VERFAHREN ZUR LEISTUNGSREGELUNG VON PUNKT-ZU-MEHRPUNKTVERBINDUNGEN IN DRAHTLOSEN TELEKOMMUNIKATIONSSYSTEMEN IN UNKOORDINIERTEM UNLIZENSIERTEM SYSTEMBETRIEB**
METHOD FOR REGULATING POWER OF POINT-TO-MULTIPOINT CONNECTIONS IN WIRELESS TELECOMMUNICATIONS SYSTEMS DURING AN UNCOORDINATED UNLICENSED SYSTEM OPERATION
PROCEDE POUR LA REGULATION DE PUISSANCE DE LIAISONS POINT-MULTIPOINT DANS DES SYSTEMES DE TELECOMMUNICATION SANS FIL EN MODE D'EXPLOITATION DU SYSTEME SANS LICENCE NON COORDONNE

(30) Priorität: 23.06.1998 DE 19827920
(43) Veröffentlichungstag der Anmeldung: 02.05.2001
(73) Patentinhaber: SIEMENS AKTIENGESELLSCHAFT, 80333 München (DE)
(72) Erfinder: BOLINTH, Edgar, D-41189 Mönchengladbach (DE); KAMPERSCHROER, Erich, D-46499 Hamminkeln (DE); ULRICH, Thomas, D-67098 Bad Dürkheim (DE); FÄRBER, Michael, D-82515 Wolfratshausen (DE); SCHWARK, Uwe, D-46399 Bocholt (DE); KLEIN, Anja, D-10709 Berlin (DE); SITTE, Armin, D-10405 Berlin (DE); KOTTKAMP, Meik, D-81369 München (DE); BENZ, Michael, D-13629 Berlin (DE)
(86) Internationale Anmeldenummer: DE9901829
(87) Internationale Veröffentlichungsnummer: WO99067898

(56) Entgegenhaltungen:
- WO-A-97/47094
- WO-A-98/21912
- GB-A- 2 174 573
- GB-A- 2 253 972

## Beschreibung

Telekommunikationssysteme mit drahtloser Telekommunikation zwischen mobilen und/oder stationären Sende-/Empfangsgeräten sind spezielle Nachrichtensysteme mit einer Nachrichtenübertragungsstrecke zwischen einer Nachrichtenquelle und einer Nachrichtensenke, bei denen beispielsweise Basisstationen und Mobilteile zur Nachrichtenverarbeitung und -übertragung als Sende- und Empfangsgeräte verwendet werden und bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung vorzugsweise digital ist,
3) die Nachrichtenübertragung über die Fernübertragungsstrecke drahtlos auf der Basis von diversen Nachrichtenübertragungsverfahren zur Mehrfachausnutzung der Nachrichtenübertragungsstrecke FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie **DECT [D**igital **E**nhanced (früher: **E**uropean) **C**ordless **T**elecommunication; vgl. *Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1*...*9, Oktober 1992* und der DECT-Publikation des *DECT-Forum, Februar 1997*, *Seiten 1 bis 16*], **GSM** [**G**roupe **S**péciale **M**obile oder **G**lobal **S**ystem for **M**obile Communication; vgl. *Informatik Spektrum 14 (1991) Juni, Nr. 3, Berlin, DE; A.Mann*: *"Der GSM-Standard - Grundlage für digitale europäische Mobilfunknetze", Seiten 137 bis 152* **in Verbindung mit** der Publikation *telekom praxis 4*/*1993, P.Smolka "GSM-Funkschnittstelle* - *Elemente und Funktionen",* *Seiten 17 bis 24*],
   **UMTS** [**U**niversal **M**obile **T**elecommunication **S**ystem; vgl. **(1):** *Nachrichtentechnik Elektronik, Berlin 45, 1995, Heft 1, Seiten 10 bis 14 und Heft 2, Seiten 24 bis 27; P.Jung, B*.*Steiner: "Konzept eines CDMA-Mobilfunksystems mit gemeinsamer Detektion für die dritte Mobilfunkgeneration"*; **(2):** *Nachrichtentechnik Elektronik, Berlin 41, 1991, Heft 6, Seiten 223 bis 227 und Seite 234; P*.*W*.*Baier, P*.*Jung, A*.*Klein: "CDMA* - *ein günstiges Vielfachzugriffsverfahren für frequenzselektive und zeitvariante Mobilfunkkanäle"*; **(3) :** *IEICE Transactions on Fundamentals of Electonics, Communications and Computer Sciences, Vol*. *E79-A, No*. *12, December 1996, Selten 1930 bis 1937; P.W.Baier, P.Jung: "CDMA Myths and Realities Revisited";* **(4) :** *IEEE Personal Communications, February 1995, Seiten 38 bis 47; A.Urie, M*.*Streeton, C.Mourot: "An Advanced TDMA Mobile Access System for UMTS"*; **(5):** *telekom praxis, 5*/*1995, Seiten 9 bis 14; P.W.Baier: "Spread-Spectrum-Technik und CDMA - eine ursprünglich* militärische *Technik erobert den zivilen Bereich";* **(6):** *IEEE Personal Communications, February 1995, Seiten 48 bis 53; P.G.Andermo, L.M.Ewerbring: "An CDMA-Based Radio Access Design for UMTS"*; **(7) :** *ITG Fachberichte 124 (1993), Berlin, Offenbach: VDE Verlag ISBN 3-8007-1965-7, Seiten 67 bis 75; Dr*. *T*.*Zimmermann, Siemens AG: "Anwendung von CDMA in der Mobilkommunikation";* **(8):** *telcom report 16, (1993), Heft 1, Seiten 38 bis 41*; *Dr*. *T*. *Ketseoglou, Siemens AG und Dr*. *T.Zimmermann, Siemens AG: "Effizienter Teilnehmerzugriff für die 3*. *Generation der Mobilkommunikation - Vielfachzugriffsverfahren CDMA macht Luftschnittstelle flexibler"*; **(9):** *Funkschau 6*/*98: R.Sietmann "Ringen um die UMTS-Schnittstelle", Seiten 76 bis 81*] WACS oder PACS, IS-54, IS-95, PHS, PDC etc. [vgl. IEEE Communications Magazine, January 1995, Seiten 50 bis 57; D.D. Falconer et al:"Time·Division Multiple Access Methods for Wireless Personal Communications"]
erfolgt.
"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Für die vorstehend angegebenen Telekommunikationssysteme und insbesondere für die CDMA-basierten Telekommunikationssysteme ist es wegen des "Near-Far"-Effektes sehr wichtig eine Leistungsregelung (power control) durchzuführen (vgl.: **(10)** K.D. Kammeyer "Nachrichtenübertragung" B.G. Teubner Stuttgart 1996, Kap. 16.1.3, insbesondere Seite 636; **(11)** K.David/-T.Benkner "Digitale Mobilfunksysteme" B.G. Teubner Stuttgart 1996, Kap. 8.7.2.2, insbesondere Seite 414).

Die Leistungsregelung ist bekannt als ein Mittel zur Interferenzminderung in multi-zellularen Mobilfunknetzen. Die Grundidee ist dabei, jedem Teilnehmer nur soviel Sendeleistung zuzuteilen, wie er gerade eben benötigt, um die gewünschte Servicequalität zu erreichen. Mit dieser Maßnahme wird die Interferenz gegenüber anderen Teilnehmern in derselben oder benachbarten Zellen deutlich reduziert. Diese Technik kann allerdings im zellularen Mobilfunk nur auf sogenannte "Pointto-Point"-Verbindungen angewendet werden, da in diesem Fall die zu verwendenden Sendeleistungen für die Übertragung z.B. zwischen stationären und mobilen Sende-/Empfangsgeräten, als: von einer Basisstation bzw. Festteil zur Mobilstation bzw. Mobilteil und umgekehrt, explizit für die Verbindung (link) zwischen der Basisstation und Mobilstation bestimmt werden können.

In Mobilfunk-Telekommunikationssystemen (z.B. GSM, UMTS), die vorzugsweise im lizensierten koordinierten Systembetrieb arbeiten, sowie in Schnurlos-Telekommunikationssystemen (z.B. DECT, PHS etc.), die vorzugsweise im unlizensierten unkoordinierten Systembetrieb arbeiten, werden jedoch auch Punkt-zu-Mehrpunktverbindungen, sogenannte "Point-to-Multipoint"-Verbindungen, verwendet. Kanäle, die solche Verbindungen nutzen, sind im allgmeinen Steuerungskanäle, die sogenannten "Common Control Channels (CCCH)". Der wichtigste Vertreter dieser Kategorie ist zweifellos der sogenannte "Broadcast Control CHannel (BCCH)". Er wird von der Basisstation in Abwärtsrichtung [Down Link (DL)] abgestrahlt. Die Aufgabe des "Broadcast Control Channels" ist es, zellspezifische Informationen sowie Synchronisationsinformation zu transportieren. Diese Informationen werden von allen in der Zelle befindlichen Mobilstationen verwendet. Da die Positionen der Mobilstationen in der Funkzelle und damit auch die benötigten Sendeleistungen jedoch stark unterschiedlich sein können, ist es im zellularen Mobilfunk nicht möglich, die Sendeleistung des "Broadcast Control Channels" zu regeln. In der Regel wird die Sendeleistung des "Broadcast Control CHannels" so angepaßt, daß er von allen Mobilstationen am Zellrand noch mit ausreichender Leistung empfangen werden kann.

Bei den bisherigen Schnurlos-Telekommunikationssystemen (z.B. DECT) wird weder für den "Traffic CHannel (TCH)" noch für den "Broadcast Control CHannel" eine Leistungsregelung verwendet.

Die der Erfindung zugrundeliegende Aufgabe besteht darin, die für Punkt-zu-Mehrpunkt-Telekommunikationsverbindungen in einem Telekommunikationssystem mit drahtloser Telekommunikation und unkoordiniertem unlizensiertem Systembetrieb - insbesondere in einem Universal-Mobil-Telekommunikation-System mit einem unkoordinierten unlizensierten Systembetrieb und einem koordinierten lizensierten Systembetrieb - vorgesehene Sendeleistung ohne wesentlichen Einschränkung auf die Sendereichweite zu regeln.

Diese Aufgabe wird durch die Merkmale des Patentanspruches 1 gelöst.

Das im Patentanspruch 1 vorgeschlagene Konzept für die Leistungsregelung von Punkt-zu-Mehrpunkttelekommunikationsverbindungen ("Point-to-Multipoint"-Verbindung) - insbesondere des Broadcast Control CHannels - für Telekommunikationssysteme mit drahtloser Telekommunikation und unkoordiniertem unlizensiertem Systembetrieb - insbesondere zukünftige Schnurlos-Telekommunikationssysteme, z.B."residential UMTS"-Systeme - nutzt die Tatsache, daß die maximale Anzahl der an einer Basisstation angemeldeten Mobilstationen bekannt ist, aus. Die Basisstation weiß also zu jedem Zeitpunkt, wieviele und welche Mobilstationen angemeldet sind. Sind alle Mobilstationen angemeldet - d.h. entspricht eine SOLL-Anzahl von an der Basisstation angemeldeter Mobilstationen einer IST-Anzahl von an der Basisstation angemeldeter Mobilstationen (N_{IST} = N_{SOLL}) -, so kann die Basisstation die Sendeleistung (erste Sendeleistung) der "am schwächsten" empfangenen Mobilstation anpassen. Anderenfalls, wenn nicht alle Mobilstationen angemeidet sind - d.h. entspricht die SOLL-Anzahl von an der Basisstation angemeldeter Mobilstationen nicht der IST-Anzahl von an der Basisstation angemeldeter Mobilstationen (N_{IST} ≠ N_{SOLL}) -, wird die Basisstation abwechselnd für eine vorgegebene erste Zeitspanne mit der maximalen Sendeleistung und anschließend für eine vorgegebene zweite Zeitspanne mit der reduzierten Sendeleistung, die an die "am schwächsten" empfangene Mobilstation angepaßt ist, senden. Auf diese Weise ist eine optimale (dynamische) Anpassung der Sendeleistung an die sich stetig ändernde Anzahl von Mobilstationen, die sich in dem Wirkungsbereich der Basisstation aufhalten, möglich.

Diese vorstehend beschriebene Vorgehensweise ist möglich, weil bei Schnurlos-Telekommunikationssystemen in der Regel eine Mobilstation pro Basisstation betrieben wird und diese in der Regel auch angemeldet ist. Die von der Basisstation in dem erstgenannten Fall (alle Mobilstationen sind angemeldet) gewählte Sendeleistung wird im wesentlichen (in der deutlich überwiegenden Anzahl von Fällen) gegenüber der maximalen Sendeleistung reduziert sein. Durch die leistungsgeregelte Punkt-zu-Mehrpunkttelekommunikationsverbindung wird die Interferenz auf andere Schnurlos-Telekommunikationssysteme minimiert und somit die Koexistenzfähigkeit verbessert. Das oben beschriebene Verfahren ist sowohl für TDMA/FDMA-basierte Systeme als auch für CDMA-basierte Systeme geeignet. Speziell für CDMA-basierte Systeme ist eine Leistungsregelung essentiell, da hierdurch das "near-far"-Problem erheblich abgeschwächt werden kann.

Nach Anspruch 2 ist es vorteilhaft, wenn die zweite Zeitspanne gemäß einer Grenzwertbetrachtung für Zeitspannen unter der hierfür allgemeingültigen Annahme, daß eine Zeitspanne einen positiven. Wert zwischen "Null" und - theoretisch betrachtet "beliebig bzw. unendlich" haben kann, den Wert "Null" aufweist, also die Basisstation gemäß Merkmal (f) des Patentanspruches 1 nur mit der maximalen Sendeleistung sendet.

Zusätzliche vorteilhafte Weiterbildungen der Erfindung sind in den übrigen Unteransprüchen angegeben.

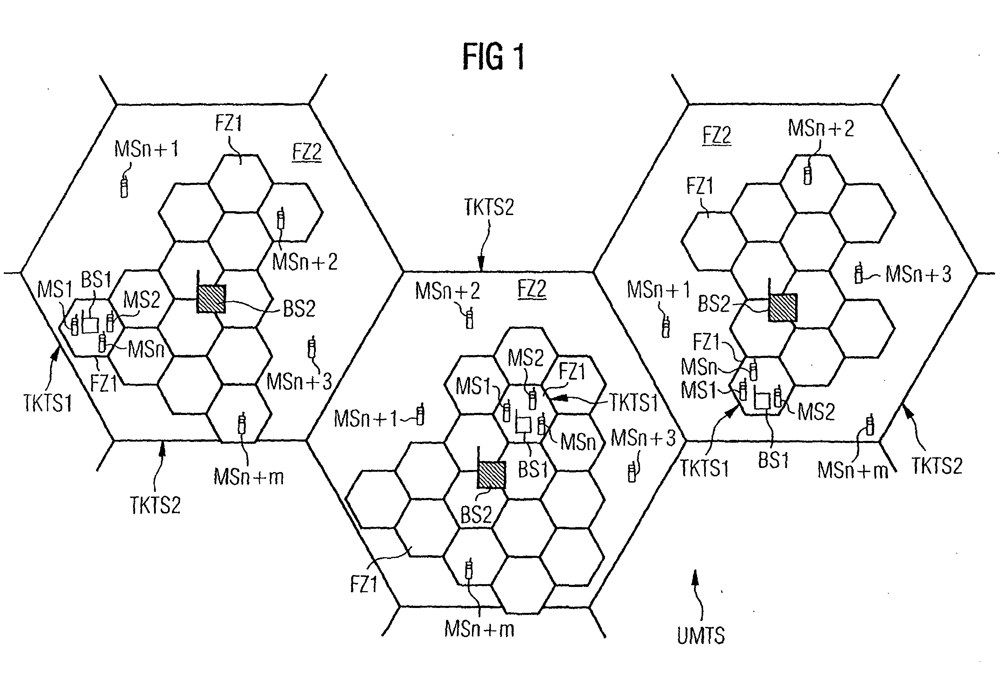

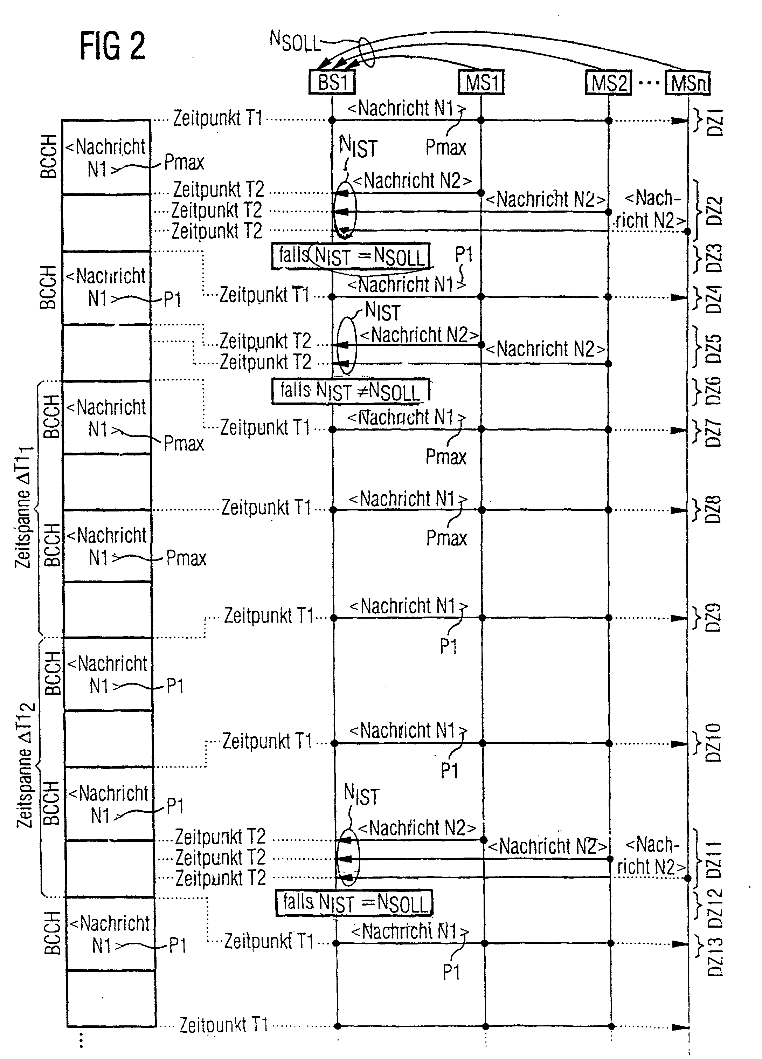

Ein Ausführungsbeispiel der Erfindung wird anhand der FIGUREN 1 und 2 erläutert. Es zeigen:
FIGUR 1 ein mögliches UMTS-Szenario mit dem Ausschnitt aus einem Universal-Mobil-Telekommunikationsnetz und einem sowohl im unkoordinierten unlizensierten als auch im koordinierten lizensierten Systembetrieb arbeitenden Universal-Mobil-Telekommunikation-System,
FIGUR 2 ein Nachrichtenflußdiagramm für das leistungsgeregelte Senden von Nachrichten bei Punkt-zu-Mehrpunkttelekommunikationsverbindungen.

FIGUR 1 zeigt ein mögliches UMTS-Szenario (Universal Mobile Telecommunication System) mit einem multi-zellularen sowohl im unkoordinierten unlizensierten als auch im koordinierten lizensierten Systembetrieb arbeitenden Universal-Mobil-Telekommunikation-System UMTS. Das dargestellte UMTS-System weist ein in ersten Funkzellen FZ1 wirkendes erstes Telekommunikationsteilsystem TKTS1 mit drahtloser Telekommunikation zwischen einer ersten Basisstation BS1 und mit n (n∈N) ersten Mobilstationen MS1...MSn auf, das im unkoordiniertem unlizersiertem Systembetrieb arbeitet. Außerdem weist das UMTS-System ein in zweiten Funkzellen FZ2 wirkendes zweites Telekommunikationsteilsystem TKST2 mit drahtloser Telekommunikation zwischen einer zweiten Basisstation BS2 und mit m (m∈N) zweiten Mobilstationen MSn+1...MSn+m auf, das im koordiniertem lizensiertem Systembetrieb arbeitet.

FIGUR 2 zeigt ein Nachrichtenflußdiagramm mit 13 zeitlich nacheinander ablaufenden Diagrammzuständen für das leistungsgeregelte Senden von ersten Nachrichten N1 bei Punkt-zu-Mehrpunkttelekommunikationsverbindungen durch die erste Basisstation BS1 an die Mobilstationen MS1...MSn. Bei dem dargestellten Nachrichtenflußdiagramm wird davon ausgegangen, daß die eine SOLL-Anzahl N_{SOLL} angebenden Mobilstationen MS1...MSn bei der ersten Basisstation BS1 angemeldet sind.

In einem ersten Diagrammzustand DZ1 sendet die Basisstation BS1 zu einem ersten Zeitpunkt T1 die erste Nachricht N1 mit einer maximalen Sendeleistung Pmax auf dem "Broadcast Control CHannel" BCCH an die Mobilstationen MS1...MSn.

In einem zweiten Diagrammzustand DZ2 senden die Mobilstationen MS1...MSn zu einem zweiten Zeitpunkt T2 eine zweite Nachricht N2 an die Basisstation BS1. Die Mobilstationen MS1...MSn, die diese zweite Nachricht N2 senden, werden mit einer IST-Anzahl N_{IST} zusammengefaßt.

In einem dritten Diagrammzustand DZ3 ermittelt die Basisstation BS1, daß die IST-Anzahl N_{IST} und die SOLL-Anzahl N_{SOLL} gleich sind.

In einem vierten Diagrammzustand DZ4 sendet die Basisstation BS1 zu dem ersten Zeitpunkt T1 die erste Nachricht N1 mit einer gegenüber der maximalen Sendeleistung Pmax reduzierten ersten Sendeleistung P1 auf dem "Broadcast Control CHannel" BCCH an die Mobilstationen MS1...MSn. Die erste Sendeleistung P1 ist so bemessen, daß ein Mobilteil MS1...MSn, dessen zweite Nachricht N2 von der Basisstation BS1 als am schwächsten empfangen worden ist, die erste Nachricht N1 gerade noch sicher empfängt.

In einem fünften Diagrammzustand DZ5 senden die Mobilstationen MS1, MS2 zu dem zweiten Zeitpunkt T2 die zweite Nachricht N2 an die Basisstation BS1. Die Mobilstationen MS1...MSn, die diese zweite Nachricht N2 senden, werden mit der IST-Anzahl N_{IST} zusammengefaßt.

In einem sechsten Diagrammzustand DZ6 ermittelt die Basisstation BS1, daß die IST-Anzahl N_{IST} und die SOLL-Anzahl N_{SOLL} ungleich sind.

In einem siebten Diagrammzustand DZ7 sendet die Basisstation BS1 zu dem ersten Zeitpunkt T1 die erste Nachricht N1 mit der maximalen Sendeleistung Pmax auf dem "Broadcast Control CHannel" BCCH an die Mobilstationen MS1...MSn. Das Senden der ersten Nachricht N1 mit der maximalen Sendeleistung Pmax zu dem ersten Zeitpunkt T1 auf dem "Broadcast Control CHannel" BCCH an die Mobilstationen MS1...MSn erfolgt auch in einem achten Diagrammzustand DZ8. Die Zeitdauer, die vom siebten Diagrammzustand DZ7, über den achten Diagrammzustand DZ8 bis zu einem neunten Diagrammzustand DZ9 verstrichen ist, wird mit einer ersten Zeitspanne ΔT1₁ angegeben.

Nach Ablauf dieser ersten Zeitspanne ΔT1₁ wird in dem neunten Diagrammzustand DZ9 die erste Nachricht N1 mit der ersten Sendeleistung P1 zu dem ersten Zeitpunkt T1 auf dem "Broadcast Control CHannel" BCCH an von der Basisstation BS1 an die Mobilstationen MS1...MSn gesendet. Das Senden der ersten Nachricht N1 mit der ersten Sendeleistung P1 zu dem ersten Zeitpunkt T1 auf dem "Broadcast Control CHannel" BCCH an die Mobilstationen MS1...MSn erfolgt auch in einem zehnten Diagrammzustand DZ10. Die Zeitdauer, die vom neunten Diagrammzustand DZ9, über den zehnten Diagrammzustand DZ10 bis zu einem dreizehnten Diagrammzustand DZ13 verstrichen ist, wird mit einer zweiten Zeitspanne ΔT1₁ angegeben.

In dem Zeitraum vom sechsten Diagrammzustand DZ6 bis zu diesem zehnten Diagrammzustand DZ10 wird davon ausgegangen, daß die IST-Anzahl N_{IST} und die SOLL-Anzahl N_{SOLL} unverändert, also ungleich, bleibt. Ist das nicht der Fall, so wird vorzugsweise unverzüglich der Ablauf so fortgesetzt, wie er im vierten Diagrammzustand DZ4 beschrieben ist. Alternativ ist es auch möglich, die entsprechende Zeitspanne ΔT1₁, ΔT1₂ volständig ablaufen zu lassen und nicht abzubrechen.

In einem elften Diagrammzustand DZ11 senden die Mobilstationen MS1...MSn zu dem zweiten Zeitpunkt T2 die zweite Nachricht N2 an die Basisstation BS1. Die Mobilstationen MS1...MSn, die diese zweite Nachricht N2 senden, werden wieder mit der IST-Anzahl N_{IST} zusammengefaßt.

In einem zwölften Diagrammzustand DZ12 ermittelt die Basisstation BS1, daß die IST-Anzahl N_{IST} und die SOLL-Anzahl N_{SOLL} wieder gleich sind.

In dem dreizehnten Diagrammzustand DZ13 sendet die Basisstation BS1 - wie im vierten Diagrammzustand DZ4 - zu dem ersten Zeitpunkt T1 die erste Nachricht N1 mit der ersten Sendeleistung P1 auf dem "Broadcast Control CHannel" BCCH an die Mobilstationen MS1...MSn.

Die jetzt nachfolgenden Diagrammzustände sind durch die 13 vorstehend beschriebenen Diagrammzustände abgehandelt.

## Patentansprüche

1. Verfahren zur Leistungsregelung von Punkt-zu-Mehrpunkttelekommunikationsverbindungen in Telekommunikationssystemen mit drahtloser Telekommunikation und unkoordiniertem unlizensiertem Systembetrieb mit folgenden Merkmalen:
(a) dem Wirkungsbereich einer den unkoordinierten unlizensierten Systembetrieb unterstützenden Basisstation (BS1) wird eine SOLL-Anzahl (N_{SOLL}) von an der Basisstation (BS1) angemeldeter Mobilteile (MS1...MSn) zugeordnet,
(b) die Basisstation (BS1) sendet zu einem vorgegebenen in regelmäßigen Zeitabständen wiederkehrenden ersten Zeitpunkt (T1) im Rahmen einer Punkt-zu-Mehrpunkttelekommunikationsverbindung eine erste Nachricht (N1) an die sich in dem Wirkungsbereich der Basisstation (BS1) aufhaltenden Mobilteile(MS1...MSn),
(c) das jeweilige Mobilteil (MS1...MSn) sendet jeweils zu einem mobilteilspezifischen, in regelmäßigen Zeitabständen wiederkehrenden zweiten Zeitpunkt (T2) eine zweite Nachricht (N2) an die Basisstation (BS1), wobei der zweite Zeitpunkt (T2) durch Ereignisse, insbesondere wie den Eintritt des Mobilteils (MS1...MSn) in den Wirkungsbereich, den Austritt des Mobilteils (MS1...MSn) aus dem Wirkungsbereich und/oder den Aufbauwunsch einer Punkt-zu-Punkt-Telekommunikationsverbindung durch das Mobilteil (MS1...MSn), bestimmbar ist,
(d) die Basisstation (BS1) erfaßt anhand der von den Mobilteilen (MS1...MSn) gesendeten zweiten Nachrichten (N2) eine IST-Anzahl (N_{IST}) von an der Basisstation (BS1) angemeldeten, sich in dem Wirkungsbereich der Basisstation (BS1) aufhaltenden Mobilteilen (MS1...MSn),
(e) wenn die IST-Anzahl (N_{IST}) mit der SOLL-Anzahl (N_{SOLL}) übereinstimmt, sendet die Basisstation (BS1) die erste Nachricht (N1) mit einer gegenüber einer maximalen Leistung (Pmax) reduzierten ersten Sendeleistung (Pl), die derart bemessen ist, daß ein Mobilteil (MS1...MSn), dessen zweite Nachricht (N2) in der Basisstation (BS1) als am schwächsten empfangen worden ist, die erste Nachricht (N1) gerade noch sicher empfängt,
(f) wenn die IST-Anzahl (N_{IST}) mit der SOLL-Anzahl (N_{SOLL}) nicht übereinstimmt, sendet die Basisstation (BS1) abwechselnd die erste Nachricht (N1) für eine vorgegebene erste Zeitspanne (ΔT1₁) mit der maximalen Sendeleistung (Pₘₐₓ) und anschließend für eine vorgegebene zweite Zeitspanne (ΔT1₂) mit der ersten Sendeleistung (P1).

2. Verfahren nach Anspruch 1, **dadurch gekennzeichnet, daß** der zweiten Zeitspanne (ΔT1₂) der Zeitspannenwert "Null" zugewiesen wird.

3. Verfahren nach Anspruch 1 oder 2, **dadurch gekennzeichnet, daß** die Punkt-zu-Mehrpunkttelekommunikationsverbindung für einen "Broadcast Control CHannel" (BCCH) benutzt wird.

4. Verfahren nach einem der Ansprüche 1 bis 3, **dadurch gekennzeichnet, daß**
die drahtlose Telekommunikation nach der CDMA-, FDMA-, und/oder TDMA-Zugriffsmethode und nach dem TDD- und/oder FDD-Prinzip durchgeführt wird.

## Claims

1. Method for closed-loop power control for point-to-multipoint telecommunications connections in telecommunications systems with wire-free telecommunication and uncoordinated, unlicensed system operation, having the following features:
(a) the effective area of a base station (BS1) which supports the uncoordinated, unlicensed system operation is allocated a NOMINAL number (N_{NOMINAL}) of mobile parts (MS1 ... MSn), which are registered with that base station (BS1),
(b) the base station (BS1) sends a first message (N1) to the mobile parts (MS1 ... MSn) which are located in the effective area of the base station (BS1) in the course of a point-to-multipoint telecommunications connection at a predetermined first time (T1) which recurs at regular time intervals,
(c) each mobile part (MS1 ... MSn) in each case sends a second message (N2) to the base station (BS1) at a second time (T2) which is specific to that mobile part and recurs at regular time intervals, in which case the second time (T2) can be determined by events, in particular such as the entry of the mobile part (MS1 ... MSn) into the effective area, the exit of the mobile part (MS1 ... MSn) from the effective area and/or a wish to set up a point-to-point telecommunications connection by the mobile part (MS1 ... MSn),
(d) the base station (BS1) uses the second messages (N2) which are sent by the mobile parts (MS1 ... MSn) to detect an ACTUAL number (N_{ACTUAL}) of mobile parts (MS1 ... MSn) which are registered with that base station (BS1) and are located in the effective area of that base station (BS1),
(e) if the ACTUAL number (N_{ACTUAL}) matches the NOMINAL number (N_{NOMINAL}), the base station (BS1) sends the first message (N1) using a first transmission power level (P1) which is less than the maximum power level (P_{MAX}) and is of such a magnitude that a mobile part (MS1 ... MSn) whose second message (N2) has been received most weakly in the base station (BS1) just reliably receives the first message (N1),
(f) if the ACTUAL number (N_{ACTUAL}) does not match the NOMINAL number (N_{NOMINAL}), the base station (BS1) alternately sends the first message (N1) at the maximum transmission power level (P_{MAX}) for a predetermined first time interval (ΔT1₁), and then sends it at the first transmission power level (P1) for a predetermined second time interval (ΔT1₂).

2. Method according to Claim 1, **characterized in that** the second time interval (ΔT1₂) is assigned the time interval value "zero".

3. Method according to Claim 1 or 2, **characterized in that**
the point-to-multipoint telecommunications connection is used for a "broadcast control channel" (BCCH).

4. Method according to one of Claims 1 to 3, **characterized in that**
the wire-free telecommunication is carried out using the CDMA, FDMA and/or TDMA access method, and using the TDD and/or FDD principle.

## Revendications

1. Procédé pour la régulation de puissance de liaisons point-multipoint dans des systèmes de télécommunication sans fil en mode d'exploitation du système sans licence non coordonné, ayant les caractéristiques suivantes :
(a) un nombre THEORIQUE (N_{SOLL}) d'appareils mobiles (MS1 ...MSn) enregistrés sur la station de base (BS1) est attribué au champ d'action d'une station de base (BS1) supportant le mode d'exploitation du système non coordonné sans licence,
(b) la station de base (BS1) émet à un premier moment (T1) prédéfini'se répétant à intervalles réguliers, dans le cadre dune liaison de télécommunication point-multipoint, un premier message (N1) aux appareils mobiles (MS1 ... MSn) se trouvant dans le champ d'action de la station de base (BS1),
(c) l'appareil mobile respectif (MS1 ... MSn) émet respectivement à un second moment (T2) spécifique à l'appareil mobile et se répétant à intervalles réguliers, un second message (N2) à la station mobile (BS1), le second moment (T2) pouvant être déterminé par des événements, notamment comme l'entrée de l'appareil mobile (MS1 ... MSn) dans le champ d'action d'une liaison de communication point-multipoint, la sortie de l'appareil mobile (MS1 ... MSn) hors du champ d'action dune liaison de communication point-multipoint et/ou le souhait de l'appareil mobile d'établir une liaison de communication point-multipoint,
(d) la station de base (BS1) enregistre, à l'aid du second message (N2) émis par les appareils mobiles (MS1 ... MSn), un nombre REEL (N_{IST}) d'appareils mobiles (MS1 ... MSn) enregistrés sur la station de base (BS1) et se trouvant dans le champ d'action de la station de base (BS1),
(e) lorsque le nombre REEL (N_{IST}) est identique au nombre THEORIQUE (N_{SOLL}), la station de base (BS1) émet le premier message (N1) avec une première puissance d'émission (P1) réduite par rapport à une puissance maximale (Pmax), cette puissance étant mesurée de telle manière qu'un appareil mobile (MS1 ... MSn), dont le second message (N2) a été reçu dans la station de base (BS1) comme le plus faible, reçoive le premier message (N1) encore de manière fiable,
(f) lorsque le nombre REEL (N_{IST}) n'est pas identique au nombre THEORIQUE (N_{SOLL}), la station de base (BS1) émet en alternance le premier message (N1) pour une première période de temps prédéfinie (ΔT1₁) avec la puissance d'émission maximale (Pmax) et ensuite avec la première puissance d'émission (P1) pour une seconde période de temps prédéfinie (ΔT1₂).

2. Procédé selon la revendication 1, **caractérisé en ce que**
la valeur de période de temps "zéro" est attribuée à la seconde période de temps (ΔT1₂).

3. Procédé selon la revendication 1 ou 2, **caractérisé en ce que**
la liaison de communication point-multipoint est utilisée pour un "Broadcast Control CHannel" (BCCH).

4. Procédé selon Tune des revendications 1 à 3, **caractérisé en ce que**
la communication sans fil est exécutée suivant la méthode d'accès CDMA, la méthode d'accès FDMA et/ou la méthode d'accès TDMA et suivant le principe TDD et/ou le principe FDD.
